# EUROPÄISCHE PATENTSCHRIFT

(11) **EP 1 350 091 B1**
(45) Veröffentlichungstag und Bekanntmachung des Hinweises auf die Patenterteilung: **03.10.2007**
(21) Anmeldenummer: 01272741.8
(22) Anmeldetag: 06.12.2001
(51) Int. Cl.: G01N 27/416, G01N 27/30

(54) **VERFAHREN ZUR BESTIMMUNG EINER RESTBETRIEBSDAUER EINER POTENTIOMETRISCHEN MESSSONDE, VORRICHTUNG ZUR DURCHFÜHRUNG DES VERFAHRENS UND IHRE VERWENDUNG**
METHOD FOR DETERMINING THE REMAINING OPERATION PERIOD OF A POTENTIOMETRIC MEASURING PROBE, DEVICE FOR CARRYING OUT SAID METHOD AND THE USE THEREOF
PROCEDE POUR DETERMINER UNE DUREE DE SERVICE RESTANTE D'UNE SONDE DE MESURE POTENTIOMETRIQUE, DISPOSITIF PERMETTANT LA MISE EN OEUVRE DE CE PROCEDE ET SON UTILISATION

(30) Priorität: 05.01.2001 DE 10100239
(43) Veröffentlichungstag der Anmeldung: 08.10.2003
(73) Patentinhaber: Mettler-Toledo AG, 8606 Greifensee (CH)
(72) Erfinder: Ammann, Jürgen, CH-8004 Zürich (CH)
(86) Internationale Anmeldenummer: PCT/IB2001/002330
(87) Internationale Veröffentlichungsnummer: WO 2002/054056

(56) Entgegenhaltungen:
- EP-A- 0 161 673
- EP-A- 0 241 601
- EP-A- 0 419 769
- DE-A- 3 405 431
- DE-A- 10 036 039
- DE-C- 19 510 574
- US-A- 4 189 367

## Beschreibung

### Technisches Gebiet

Die Erfindung betrifft ein Verfahren zur Bestimmung einer Restbetriebsdauer einer potentiometrischen Messsonde gemäss dem Oberbegriff des Anspruches 1 sowie eine Vorrichtung zur Durchführung des Verfahrens und ihre Verwendung.

### Stand der Technik

Eine weit verbreitete Art von Messsonden für potentiometrische Messungen von lonenkonzentrationen oder von Redoxpotentialen ist mit einem Diaphragma aus einem porösen Material ausgestattet, über das ein in der Messsonde enthaltener, allgemein in flüssiger Form vorliegender Bezugs- und/oder Brückenelektrolyt mit einer Messlösung in Kontakt bringbar ist. Insbesondere beim Einsatz für die Prozessüberwachung und/oder Prozesssteuerung bei chemischen oder mikrobiologischen Verfahren können Verschmutzungen des Diaphragmas auftreten, die zu einer Verfälschung des Messergebnisses führen.

Aus der DE 3405431 C2 ist eine Messsonde ohne Diaphragma bekannt, welche für Verschmutzungen wesentlich weniger anfällig ist. Die dort beschriebene Messsonde hat ein Gehäuse aus elektrisch isolierendem Material, wobei das Gehäuse mindestens einen Hohlraum zur Aufnahme eines Bezugselementes und einen Elektrolyten sowie mindestens eine Öffnung aufweist, durch die der Elektrolyt mit einer ausserhalb des Gehäuses befindlichen Messlösung in Kontakt bringbar ist. Der Hohlraum ist mit einem ionendurchlässigen hochviskosen mikroporösen Polymer ausgefüllt, wobei das Polymer und der Elektrolyt zusammen eine Füllmasse bilden. Durch diese Bauweise ist eine hohe Konstanz des am Bezugselement messbaren Potentials auch bei stark verschmutzten Messlösungen gewährleistet, und überdies ist die Messsonde mit Drücken von wesentlich mehr als 10 bar belastbar.

Ein bekanntes Problem bei Messsonden dieser Gattung besteht darin, dass mit fortschreitender Betriebsdauer der anfänglich im Polymer befindliche Elektrolyt zunehmend in die Messlösung übertritt, wodurch sich im Polymer eine im Inneren des Gehäuses fortschreitende Verarmung an Elektrolyten ergibt, die auch als Alterungsprozess der Messsonde bezeichnet wird. Wenn die Verarmung an Elektrolyten schliesslich das Bezugselement erreicht, stellt sich eine unerwünschte Veränderung des am Bezugselement abgreifbaren Potentials ein. Zur Vermeidung verfälschter Messergebnisse ist es deshalb erforderlich, den Alterungsprozess der Messsonde zu überwachen. Insbesondere sollte eine bevorstehende Ankunft der Verarmung am Bezugselement rechtzeitig, das heisst zu einem Zeitpunkt, in dem noch eine angemessene Restbetriebsdauer verbleibt, erkennbar sein.

Zur Lösung dieses Problems ist in der DE 3405431 C2 vorgesehen, dass der Elektrolyt eine Suspension von homogen verteilten Partikeln eines Neutralsalzes mit Ionen gleicher Überführungszahl in einer wässrigen Lösung des Neutralsalzes ist, wobei das Polymer und die Neutralsalzsuspension zusammen ein Gel bilden, das eine Trübung durch die Neutralsalzpartikeln aufweist. Durch diese Ausbildung lässt sich der Alterungszustand der bekannten Messsonde visuell feststellen, da die Trübung des Polymers mit fortschreitender Alterung abnimmt. Der Grund für diese Abnahme liegt darin, dass die feinverteilten Neutralsalzpartiklen laufend in Lösung gehen, bis im Endzustand eine Lösung vorliegt, die im wesentlich keine suspendierten Neutralsalzpartikeln enthält und dementsprechend eine stark verminderte Trübung aufweist. Dabei wurde festgestellt, dass zwischen einem in ursprünglichem Zustand vorliegenden Bereich des Gels, in dem die Neutralsalzpartikeln homogen suspendiert sind, und einem zweiten Bereich, in dem die Neutralsalzpartikeln in Lösung gegangen sind, sich eine deutlich sichtbare Verarmungsfront ausbildet, deren Fortschreiten auf einem von der Öffnung des Gehäuses bis hin zum Bezugselement führenden Verarmungsweg visuell verfolgt werden kann. Aus der Lage der Verarmungsfront und ihrer Wanderungsgeschwindigkeit kann auf den Alterungszustand beziehungsweise auf die Geschwindigkeit der Alterung und damit auf die Restbetriebsdauer geschlossen werden.

Ein Nachteil der aus der DE 3405431 C2 bekannten Messsonde besteht jedoch darin, dass zur Überwachung des Alterungszustandes beziehungsweise zur Bestimmung der Restbetriebsdauer der Messsonde ein einwandfreier visueller Zugang zum Hohlraum der Messsonde erforderlich ist. Dies schliesst einerseits die Verwendung eines nicht durchsichtigen Gehäuses aus und ergibt andererseits Probleme bei einer Verschmutzung eines an sich durchsichtigen Gehäuses. Ein weiteres und gravierendes Problem stellt die Verfärbung oder Verschmutzung des im Hohlraum befindlichen Gels, beispielsweise durch aus der Messlösung eindiffundierenden Farbstoff oder durch aus der Lösung eingeschleppte Schmutzpartikel dar, welche die visuelle Erkennung der Verarmungsfront praktisch verunmöglichen können. Nachteilig ist überdies, dass zwecks Sichtbarmachung der Verarmungsfront ein als Suspension von homogen verteilten Partikeln eines Neutralsalzes mit Ionen gleicher Überführungszahl in einer wässrigen Lösung des Neutralsalzes vorliegender Elektrolyt vorzusehen ist, was insbesondere die Verwendung anders ausgebildeter Elektrolyten ausschliesst.

### Darstellung der Erfindung

Aufgabe der Erfindung ist es, eine verbessertes Verfahren zur Bestimmung der Restbetriebsdauer anzugeben, bei welchem die obigen Nachteile vermieden werden. Weitere Aufgaben der Erfindung bestehen darin, eine Vorrichtung zur Durchführung des Verfahrens bereitzustellen und eine Verwendung der Vorrichtung anzugeben.

Gelöst wird diese Aufgabe durch das im Anspruch 1 definierte Verfahren sowie durch die im Anspruch 15 definierte Vorrichtung beziehungsweise die im Anspruch 16 definierte Verwendung.

Beim erfindungsgemässen Verfahren zur Bestimmung einer Restbetriebsdauer einer potentiometrischen Messsonde, welche einen Elektrolyten sowie ein primäres Bezugselement und ein sekundäres Bezugselement aufweist, welche derart angeordnet sind, dass eine von einer Öffnung der Messsonde ausgehend fortschreitende Verarmung des Elektrolyten das sekundäre Bezugselement vor dem primären Bezugselement erreicht, wird die zwischen primärem Bezugselement und sekundärem Bezugselement vorliegende Potentialdifferenz auf Einhaltung eines vordefinierten Toleranzkriteriums überwacht. Bei Verletzung des Toleranzkriteriums wird eine seit Inbetriebnahme der Messsonde verflossene Grundbetriebsdauer ermittelt und daraus die Restbetriebsdauer der Messsonde berechnet.

Dadurch, dass beim erfindungsgemässen Verfahren eine visuelle Zugänglichkeit des Hohlraums nicht erforderlich ist, lässt sich das Verfahren insbesondere auch bei Messsonden mit einem nicht durchsichtigen Gehäuse oder bei Messsonden, die in einer Armatur eingebaut sind, anwenden. Darüber hinaus ist das Verfahren auch bei Messsonden mit verschmutztem Gehäuse durchführbar, was beispielsweise beim Einsatz im Zusammenhang mit verschmutzten oder schaumhaltigen Messlösungen vorteilhaft ist. Da es zudem nicht erforderlich ist, zwecks Sichtbarmachung der Verarmungsfront einen als Suspension von homogen verteilten Partikeln eines Neutralsalzes mit lonen gleicher Überführungszahl in einer wässrigen Lösung des Neutralsalzes vorliegenden Elektrolyt vorzusehen, wird der Anwendungsbereich des Verfahrens zusätzlich erweitert. Insbesondere kann es auch bei Messsonden, deren Elektrolyt als gesättigte oder annähernd gesättigte Lösung eines Neutralsalzes in einem geeigneten Lösungsmittel, beispielsweise als annähernd gesättigte Lösung von Kaliumchlorid in Wasser vorliegt, angewendet werden. Dadurch, dass man bei Verletzung des Toleranzkriteriums eine seit Inbetriebnahme der Messsonde verflossene Grundbetriebsdauer ermittelt und daraus die Restbetriebsdauer der Messsonde berechnet, lässt sich die unter den verwendeten Betriebsbedingungen herrschende Alterungsgeschwindigkeit der überwachten Messsonde mitberücksichtigen und damit die Zuverlässigkeit der ermittelten Restbetriebsdauer erhöhen.

Die erfindungsgemässe Vorrichtung weist eine potentiometrische Messsonde mit einem Elektrolyten sowie einem primären Bezugselement und einem sekundären Bezugselement auf, welche derart angeordnet sind, dass eine von einer Öffnung der Messsonde ausgehend fortschreitende Verarmung des Elektrolyten das sekundäre Bezugselement vor dem primären Bezugselement erreicht. Ausserdem sind Zeiterfassungsmittel zur Erfassung einer seit Inbetriebnahme der Messsonde verflossenenen Betriebsdauer, Überwachungsmittel zur Überwachung der zwischen primärem Bezugselement und sekundärem Bezugselement vorliegenden Potentialdifferenz sowie Rechenmittel zur Berechnung der Restbetriebsdauer der Messonde vorgesehen. Die berechnete Restbetriebsdauer kann mit üblichen Mitteln zur Anzeige gebracht und/oder weiterverarbeitet werden.

Die erfindungsgemässe Vorrichtung kann mit Vorteil zur Prozessüberwachung und/oder Prozesssteuerung verwendet werden.

Vorteilhafte Ausführungsformen des Verfahrens sind in den abhängigen Ansprüchen beschrieben.

Bei der Ausführungsform nach Anspruch 2 führt eine Verletzung des Toleranzkriteriums zur Auslösung eines Warnsignals. Dieses Warnsignal kann beispielsweise als optische und/oder akustische Anzeige, insbesondere als Aufforderung zur Einplanung geeigneter Massnahmen wie Wartung oder Ersatz der Messsonde, ausgestaltet sein.

Die Überwachung der Potentialdifferenz erfolgt gemäss Anspruch 3 im wesentlichen kontinuierlich. Alternativ kann die Potentialdifferenz gemäss Anspruch 4 in zeitlichen Abständen, beispielsweise periodisch überwacht werden.

Gemäss Anspruch 5 ist vorgesehen, dass beim Überwachen der Potentialdifferenz eine Signalfilterung vorgenommen wird. Dies ist besonders vorteilhaft, wenn die Potentialdifferenz einen fluktuierierenden oder verrauschten zeitlichen Verlauf aufweist.

Grundsätzlich bestehen verschiedene Möglichkeiten zur Festlegung eines Toleranzkriteriums beziehungsweise zur Definition, was als Verletzung des Toleranzkriteriums betrachtet wird. Gemäss Anspruch 6 wird als Verletzung des Toleranzkriteriums der Austritt des Absolutbetrages der Potentialdifferenz aus einem vordefinierten Toleranzbereich verwendet. Gemäss Anspruch 7 wird als Verletzung des Toleranzkriteriums das Durchschreiten eines oder mehrerer vordefinierter Toleranzwerte durch den Absolutbetrag der ersten zeitlichen Ableitung der Potentialdifferenz verwendet, das heisst es wird überwacht. Gemäss Anspruch 8 wird als Verletzung des Toleranzkriteriums das Durchschreiten eines oder mehrerer vordefinierter Toleranzwerte durch den Absolutbetrag der zweiten zeitlichen Ableitung der Potentialdifferenz verwendet.

Prinzipiell kann aus der Grundbetriebsdauer, welche bei Verletzung des Toleranzkriteriums seit Inbetriebnahme der Messsonde verflossen ist, die Restbetriebsdauer der Messsonde auf verschiedene Arten berechnet werden. Beispielsweise wird gemäss Anspruch 9 die Restbetriebsdauer durch Multiplikation der Grundbetriebsdauer mit einem vordefinierten Multiplikator berechnet.

Vorteilhafterweise wird gemäss Anspruch 10 die Potentialdifferenz nach erfolgter Verletzung des Toleranzkriteriums auf Einhaltung eines vordefinierten Alarmkriteriums überwacht und bei Verletzung des Alarmkriteriums die Restbetriebsdauer auf Null gesetzt. Insbesondere kann gemäss Anspruch 11 vorgesehen sein, dass eine Verletzung des Alarmkriteriums zur Auslösung eines Alarmsignals führt. Diese Ausführungsformen gewähren eine zusätzliche Betriebssicherheit. Insbesondere lässt sich damit vermeiden, dass infolge einer nicht erkannten oder nicht beachteten Anzeige der Restbetriebsdauer die Messsonde verwendet wird, nachdem die Verarmung des Elektrolyten bereits am primären Bezugselement angelangt ist.

Zur Festlegung des Alarmkriteriums beziehungsweise zur Definition, was als Verletzung des Alarmkriteriums betrachtet wird, bestehen analog zum Toleranzkriterium verschiedene Möglichkeiten, wobei bevorzugte Ausführungsformen in den Ansprüchen 12 bis 14 definiert sind.

### Kurze Beschreibung der Zeichnungen

Ausführungsbeispiele der Erfindung werden nachfolgend anhand der Zeichnungen näher beschrieben, dabei zeigen:
- Figur 1: eine als Bezugselektrode ausgebildete Messsonde, im Längsschnitt;
- Figur 2: eine Messsonde mit verlängertem Verarmungsweg, in verkürzter Darstellung, im Längsschnitt;
- Figur 3: den oberen Teil einer weiteren Messsonde mit verlängertem Verarmungsweg, im Längsschnitt;
- Figur 4: beispielhafte Verläufe der Potentiale der beiden Bezugselemente sowie der Potentialdifferenz als Funktion der Betriebsdauer;
- Figur 5: den Verlauf des Absolutbetrags der Potentialdifferenz der Figur 4 als Funktion der Betriebsdauer;
- Figur 6: einen beispielhaften Verlauf des Absolutbetrags der ersten Ableitung der Potentialdifferenz als Funktion der Betriebsdauer;
- Figur 7: einen beispielhaften Verlauf des Absolutbetrags der zweiten Ableitung der Potentialdifferenz als Funktion der Betriebsdauer.

### Wege zur Ausführung der Erfindung

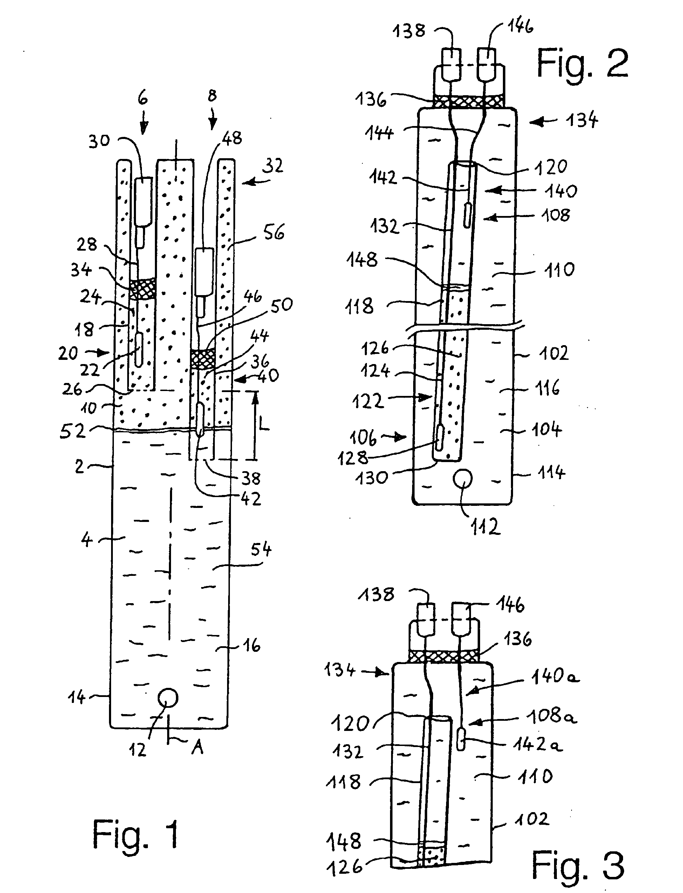

Die Figur 1 zeigt eine als Bezugselektrode ausgebildete Messsonde mit einem üblicherweise als Elektrodenschaft bezeichneten rohrartigen Gehäuse 2 aus elektrisch isolierendem Material, beispielsweise aus Glas oder aus einem Kunststoff wie einem Polyaryletherketon (PAEK), insbesondere Polyetheretherketon (PEEK). Das Gehäuse 2 weist einen Hohlraum 4 auf, welcher ein primäres Bezugselement 6, ein sekundäres Bezugselement 8 sowie einen Elektrolyten 10 enthält. Eine Öffnung 12 des Gehäuses 2 ist dazu vorgesehen, beim Eintauchen der Messonde in eine in der Figur nicht dargestellte Messlösung den Elektrolyten 10 mit der Messlösung in Kontakt zu bringen. Im gezeigten Beispiel ist die Öffnung 12 durch eine durchgehende Bohrung in einem endständigen Bereich 14 des Gehäuses 2 gebildet. Der Hohlraum 4 ist mit einem ionendurchlässigen hochviskosen mikroporösen Polymer ausgefüllt, weiches zusammen mit dem Elektrolyten 8 eine Füllmasse 16 bildet. Um ein Ausfliessen der Füllmasse 16 durch die Öffnung 12 zu verhindern, sollte die Füllmasse bei den vorgesehenen Betriebstemperaturen der Messsonde zähflüssig oder sogar fest sein. Diesbezüglich hat sich als die Füllmasse bildendes Polymer ein Copolymer von Acrylamid und N,N¹-Methylen-bis-acrylamid bewährt.

Das primäre Bezugselement 6 ist als einseitig offene Patrone 18 ausgebildet, welche eine Primärelektrode 20 mit bekanntem Potential enthält. Beispielsweise ist die Primärelektrode als Ag/AgCl-Elektrode ausgestaltet, die einen chlorierten Silberdraht 22 aufweist, der in einen Primärelektrolyten 24 eingetaucht ist. Um ein Ausfliessen des Primärelektrolyten 24 am offenen Ende 26 der Patrone 18 zu verhindern, ist dieser in die Poren eines ionendurchlässigen mikroporösen Polymers, vorzugsweise desselben wie es Bestandteil der Füllmasse 16 ist, eingeschlossen. In dem dem offenen Ende 26 gegenüberliegenden Teil des primären Bezugselementes 6 ist ein über eine drahtförmige Zuleitung 28, beispielsweise einen Platindraht, mit der Primärelektrode 20 verbundener Steckkontakt 30 vorgesehen, über den eine Verbindung mit im Kopfteil 32 oder ausserhalb des Gehäuses 2 angeordneten Anschlusselementen hergestellt werden kann. Ausserdem ist innerhalb des primären Bezugselementes 6 eine Dichtung 34, beispielsweise eine Glas- oder Kunststoffdichtung vorgesehen, durch die eine Berührung des Steckkontaktes 30 mit dem Primärelektrolyten 24 verhindert wird. Anstelle der endständigen Öffnung 26 kann gewünschtenfalls eine laterale Öffnung vorgesehen sein.

Im Beispiel der Figur 1 ist das sekundäre Bezugselement 8 im wesentlichen identisch ausgebildet wie das primäre Bezugselement 6 und beinhaltet dementsprechend eine Patrone 36 mit einem offenen Ende 38, welche eine als Ag/AgCl-Elektrode ausgestaltete Sekundärelektrode 40 mit einem chlorierten Silberdraht 42 aufweist, der in einen Sekundärelektrolyten 44 eingetaucht ist. Der Sekundärelektrolyt 44 ist in die Poren eines ionendurchlässigen mikroporösen Polymers, vorzugsweise desselben wie es Bestandteil der Füllmasse 16 ist, eingeschlossen. Ausserdem weist das sekundäre Bezugselement 8 einen über eine drahtförmige Zuleitung 46, beispielsweise einen Platindraht, mit der Sekundärelektrode 40 verbundenen Steckkontakt 48 auf, über den eine Verbindung mit im Kopfteil 32 oder ausserhalb des Gehäuses 2 angeordneten Anschlusselementen hergestellt werden kann. Innerhalb des sekundären Bezugselementes 8 ist überdies eine Dichtung 50, beispielsweise eine Glas- oder Kunststoffdichtung vorgesehen, durch die eine Berührung des Steckkontaktes 48 mit dem Sekundärelektrolyten 44 verhindert wird.

Wie aus der Figur 1 hervorgeht, sind primäres Bezugselement 6 und sekundäres Bezugselement 8 längsverschoben zueinander angeordnet, wobei das offene Ende 26 des primären Bezugselementes 6 weiter entfernt von der Öffnung 12 ist als das offene Ende 38 des sekundären Bezugselementes 8. Wie nachfolgend noch näher erläutert wird, bewirkt die beschriebene Anordnung, dass eine von der Öffnung 12 bis zum primären Bezugselement 6 fortschreitende Verarmung an Elektrolyten 10 das sekundäre Bezugselement 8 vor dem primären Bezugselement 6 erreicht.

Der Elektrolyt 10 und vorzugsweise auch der Primärelektrolyt 24 und der Sekundärelektrolyt 44 beinhaltet vorzugsweise eine Suspension von feinteiligen KaliumchloridPartikeln in einer wässrigen Kaliumchloridlösung, wobei die Menge des suspendierten Kaliumchlorids mindestens 30, beispielsweise 30 bis 1500, vorzugsweise 100 bis 800, insbesondere 200 bis 400, Prozent, bezogen auf das Trockengewicht des Polymers beträgt. Anstelle einer wässrigen kann auch eine teilwässrige Kaliumchloridlösung verwendet werden, beispielsweise eine Lösung von Kaliumchlorid in einem Gemisch von Wasser und Glycerin oder Äthylenglykol, wodurch eine Verringerung des Wasserdampfpartialdruckes erreicht wird, was insbesondere für den Einsatz bei einer erhöhten Betriebstemperatur erwünscht ist. Alternativ können der Elektrolyt 10 und/oder der Primärelektrolyt 24 und/oder der Sekundärelektrolyt 44 zusammen mit dem Polymer einen Festkörperelektrolyten bilden.

Mit zunehmender Alterung bzw. fortschreitender Betriebsdauer der Messsonde tritt der anfänglich in der Füllmasse 16 befindliche Elektrolyt 10, d.h. die Kalium- und Chloridionen, zunehmend in die Messlösung über, wodurch sich im Hohlraum 4 eine von der Öffnung 12 her ins Innere der Messsonde fortschreitende Verarmungsfront 52 ausbildet. Die Verarmungsfront stellt dabei eine Grenze zwischen einem verarmten Teil 54 der Füllmasse 16, in welchem die Kaliumchloridpartikeln aufgelöst wurden, und einem nicht verarmten Teil 56 dar, in welchem noch Kaliumchloridpartikeln vorhanden sind.

Anstelle der Suspension von Kaliumchloridpartikeln kann als Elektrolyt auch eine annähernd gesättigte Lösung, beispielsweise eine ungefähr 3-molare wässrige Lösung von Kaliumchlorid verwendet werden. Dies führt allerdings zum Nachteil einer verkürzten Standzeit, da der in der Füllmasse 16 anfänglich verteilte Vorrat an Kaliumchlorid geringer ist als bei einem als Suspension vorliegenden Elektrolyten.

Im Beispiel der Figur 1 schreitet die Verarmungsfront 52 im wesentlichen entlang der Längsachse A des Gehäuses 2 fort. Nachdem die Verarmungsfront 52, wie in der Figur 1 dargestellt, das offene Ende 38 des sekundären Bezugselementes 8 erreicht und bereits überschritten hat, stellt sich auch im Inneren des sekundären Bezugselementes 8, d.h. im Sekundärelektrolyten 44 eine Verarmung ein. Als Folge hiervon ergibt sich eine Veränderung des bis anhin konstanten Potentials V₂ der Sekundärelektrode 40. Im weiteren Verlauf würde die Verarmungsfront 52 auch das primäre Bezugselement 6 erreichen und dort eine Veränderung des Potentials V₁ der Primärelektrode 20 hervorrufen.

Die Figur 2 zeigt eine Messsonde mit stark verlängertem Verarmungsweg. Die Messsonde weist ein rohrartiges Gehäuse 102 aus elektrisch isolierendem Material, beispielsweise aus Glas oder aus einem Kunststoff wie einem Polyaryletherketon (PAEK), insbesondere Polyetheretherketon (PEEK) auf. Ein Hohlraum 104 des Gehäuses 102 enthält ein primäres Bezugselement 106, ein sekundäres Bezugselement 108 sowie einen Elektrolyten 110, wobei eine Öffnung 112 in einem Endbereich 114 des Sondengehäuses 102 vorgesehen ist. Der Hohlraum 104 ist mit einem ionendurchlässigen hochviskosen mikroporösen Polymer ausgefüllt, welches zusammen mit dem Elektrolyten 110 eine Füllmasse 116 bildet, die vorzugsweise dieselbe Zusammensetzung aufweist wie im Ausführungsbeispiel der Figur 1.

Wie aus der Figur 2 hervorgeht, beinhaltet das patronenförmig ausgebildete primäre Bezugselement 106 ein einseitig offenes Innenrohr 118, welches im wesentlichen parallel zur Längsachse des Gehäuses 102 angeordnet ist, wobei das offene Ende 120 des Innenrohres 118 von der Öffnung 112 des Sondengehäuses 102 abgewandt ist. Das primäre Bezugselement 106 enthält eine Primärelektrode 122 mit bekanntem Potential, wobei diese im gezeigten Beispiel als Ag/AgCl-Elektrode ausgestaltet ist, die einen endständig chlorierten Silberdraht 124 aufweist, der in einen Primärelektrolyten 126 eingetaucht ist. Um ein Ausfliessen des Primärelektrolyten 126 am offenen Ende 120 des Innenrohres 118 zu verhindern, ist dieser in die Poren eines ionendurchlässigen mikroporösen Polymers, vorzugsweise desselben wie es Bestandteil der Füllmasse 116 ist, eingeschlossen. Der chlorierte Endabschnitt 128 des Silberdrahtes 124 ist vorteilhafterweise in der Nähe des verschlossenen Endes 130 des Innenrohres 118 angeordnet. Eine drahtförmige Zuleitung 132, beispielsweise ein Platindraht, führt vom Silberdraht 124 über eine im Kopfteil 134 des Gehäuses 102 angeordnete Dichtung 136, beispielsweise eine Glas- oder Kunststoffdichtung, zu einem externen Steckkontakt 138.

Das sekundäre Bezugselement 108 ist im endnahen Bereich des Innenrohres 118 angeordnet und umfasst eine Sekundärelektrode 140 mit einem endständig chlorierten Silberdraht 142, der in einen nahe beim offenen Ende 120 des Innenrohres 118 befindlichen Teil des Primärelektrolyten 126 getaucht ist, welcher somit auch als Sekundärelektrolyt wirkt. Die Sekundärelektrode 140 ist über eine drahtförmige Zuleitung 144 über die im Kopfteil 134 des Gehäuses 102 angeordnete Dichtung 136 mit einem externen Steckkontakt 146 verbunden.

Aus der Figur 2 ist ersichtlich, dass der Verarmungsweg von der Öffnung 112 zunächst nach oben bis zum offenen Ende 120 des Innenrohres 118 und von dort innerhalb des Innenrohres 118 nach unten bis annähernd an das verschlossene Ende 130 führt. In der Figur 2 ist eine bereits bis ins Innenrohr 118 fortgeschrittene Verarmungsfront 148 dargestellt.

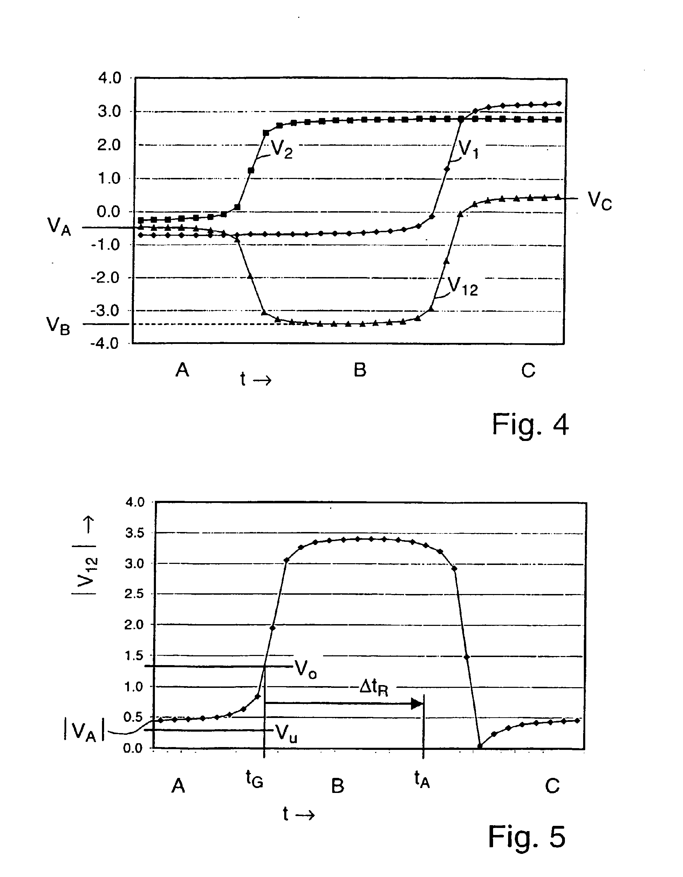

Alternativ zur Ausgestaltung der Figur 2 kann gemäss der Figur 3 die Sekundärelektrode 140a ausserhalb des Innenrohres 118 angeordnet sein, wobei der endständig chlorierte Silberdraht 142a vorzugsweise in einen unmittelbar ausserhalb des offenen Endes 120 befindlichen Teil des Elektrolyten 110 eingetaucht ist.

Anstelle der in den Figuren dargestellten Drahtelektroden können an sich bekannte Leiterbahnelektroden vorgesehen sein, welche entsprechend der Anordnung nach einem der obigen Ausführungsbeispiele auf der inneren oder äusseren Wandfläche eines patronenförmigen Bezugselementes oder auf der inneren Wandfläche des Sondengehäuses aufgebracht sein können.

Neben den oben beschriebenen, als Bezugselektroden für die Messung von lonenkonzentrationen oder Redoxpotentialen ausgebildeten Ausgestaltungen kann die erfindungsgemässe Messsonde auch als Einstabmesskette ausgebildet sein. Zu diesem Zweck ist die Messsonde zusätzlich mit einer Messelektrode, beispielsweise mit einer pH-Elektrode auszustatten. Vorzugsweise ist dann die Messelektrode in an sich bekannter Weise als zentrisches Längsrohr innerhalb einer ringförmig ausgebildeten Bezugselektrode angeordnet, wie beispielsweise der Figur 4 der DE 3405431 C2 entnehmbar ist.

Das Verfahren zur Bestimmung einer Restbetriebsdauer wird nachfolgend anhand der Messsonde gemäss der Figur 2 erläutert, die Anwendung bei anderen gattungsgleichen Messsonden erfolgt analog.

Bei der Verwendung der Messsonde wird das primäre Bezugselement 106 in an sich bekannter Weise für eine bestimmungsgemässe potentiometrische Messung, beispielsweise zur Prozessüberwachung und/oder Prozesssteuerung, eingesetzt. Dabei sollte das Potential V₁ der Primärelektrode 122, welches ja als Bezugspotential für die besagte Messung dient, möglichst konstant sein. Dies ist jedoch insbesondere dann nicht mehr der Fall, wenn die Verarmungsfront 148 bei der Primärelektrode 122 angelangt ist. Um das Auftreten dieses unerwünschten Ereignisses mit einer angemessenen Vorwarnzeit zu erkennen, wird das Potential V₂ der Sekundärelektrode 140 bzw. die Potentialdifferenz V₁₂ = V₁ - V₂ überwacht. Die Überwachung von V₁₂ kann kontinuierlich oder in zeitlichen Abständen, beipielsweise periodisch, erfolgen.

Die Figur 4 zeigt beispielhaft die Verläufe der Potentiale V₁ und V₂ sowie der Potentialdifferenz V₁₂ als Funktion der Betriebsdauer t der in der Figur 2 dargestellten Messsonde. Dabei können drei aufeinanderfolgende Zeitbereiche A, B und C unterschieden werden, welche sich wie folgt erklären lassen.

Kurz nach der zum Zeitpunkt t = 0 erfolgten Inbetriebnahme der neuen bzw. regenerierten Messsonde befindet sich die Verarmungsfront 148 in unmittelbarer Nähe der Öffnung 112. Falls die Primärelektrode 122 und die Sekundärelektrode 140 im wesentlichen identisch aufgebaut sind, sind deren Potentiale V₁ und V₂ annähernd gleich und die Potentialdifferenz V₁₂ ist vernachlässigbar klein. In der Praxis wird jedoch aufgrund gewisser Unterschiede zwischen Primär- und Sekundärelektrode bereits anfänglich eine zumindest geringfügige Potentialdifferenz V₁₂ vorliegen. Im Beispiel der Figur 4 sind anfänglich sowohl V₁ als auch V₂ negativ, wobei die Potentialdifferenz V₁₂ einen negativen Wert V_{A} hat. Solange sich die Verarmungsfront 148 im Bereich zwischen der Öffnung 112 und der Sekundärelektrode 140 befindet, bleiben die Potentiale V₁ und V₂ wie auch die Potentialdifferenz V₁₂ im wesentlichen konstant. Diese Situation entspricht dem Zeitbereich A der Figur 4.

Wenn die Verarmungsfront nach einer gewissen Betriebsdauer in die Nähe der Sekundärelektrode 140 gelangt ist, beginnt sich das Potential V₂ der Sekundärelektrode zu verändern und nimmt nach dem Passieren der Verarmungsfront einen neuen, annähernd konstanten Wert an, wobei dieser im gezeigten Beispiel positiv ist. Der entsprechende Zeitverlauf der Potentialdifferenz V₁₂ zeigt einen ersten sprungartigen Übergang vom anfänglichen Wert V_{A} auf einen Wert V_{B}. In der Folge bleibt die Potentialdifferenz V₁₂ im Zeitraum B im wesentlichen konstant. Die Verarmungsfront 148 befindet sich in diesem Zeitraum zwischen der Sekundärelektrode 140 und der Primärelektrode 122, was der in der Figur 2 dargestellten Situation entspricht.

Wenn die Verarmungsfront 148 die Primärelektrode 122 erreicht, führt sie dort zu einer Veränderung des Potentials V₁ welches im gezeigten Beispiel sprungartig zunimmt. Als Folge hiervon findet eine entsprechende Veränderung der Potentialdifferenz V₁₂ statt, welche im Beispiel der Figur 4 einen zweiten sprungartigen Übergang vom Wert V_{B} auf den Wert V_{C} beinhaltet.

Aus obigem ist erkennbar, dass das Auftreten der ersten sprungartigen Veränderung der Potentialdifferenz V₁₂ auf das Eintreffen der Verarmungsfront bei der Sekundärelektrode hinweist und demnach als Vorankündigung der unerwünschten Potentialveränderung an der Primärelektrode herangezogen werden kann. Diese Vorankündigung erfolgt mit einer Vorankündigungszeit, die im wesentlichen dem Zeitintervall B entspricht. Das Zeitintervall B hängt einerseits vom Längsversatz L der beiden Bezugselemente und andererseits von der Geschwindigkeit ab, mit der die Verarmungsfront fortschreitet, wobei diese Geschwindigkeit sowohl von den Materialeigenschaften wie auch von den Betriebsbedingungen der Messsonde abhängt.

Beim Betrieb der Messsonde wird die Potentialdifferenz V₁₂ auf Einhaltung eines vordefinierten Toleranzkriteriums überwacht, und bei Verletzung des Toleranzkriteriums wird die seit Inbetriebnahme der Messsonde verflossene Grundbetriebsdauer t_{G} ermittelt. Sinnvollerweise ist das Toleranzkriterium so anzusetzen, dass dessen Verletzung annähernd zu dem Zeitpunkt erfolgt, in dem die Vearmungsfront die Sekundärelektrode erreicht. Im Beispiel der Figur 4 wäre das Toleranzkriterium also derart anzusetzen, dass dessen Verletzung im Bereich der ersten sprungartigen Veränderung der Potentialdifferenz V₁₂ erfolgt. Nachdem die Grundbetriebsdauer t_{G} feststeht, wird daraus die Restbetriebsdauer Δt_{R} der Messsonde berechnet. Zweckmässigerweise ist die Berechnung der Restbetriebsdauer Δt_{R} so anzusetzen, dass bei deren Ablauf, d.h. zum Zeitpunkt t_{A} = t_{G} + Δt_{R} die Verarmungsfront noch nicht bis zum primären Bezugselement vorgedrungen ist, d.h. dass eine unerwünschte Veränderung des Potentials V₁ noch nicht eingetreten ist. Im Beispiel der Figur 4 sollte also die Restbetriebsdauer Δt_{R} keinesfalls länger als der Zeitbereich B sein.

Für einen zuverlässigen Betrieb der Messsonde sollten nach Ablauf der Grundbetriebsdauer und jedenfalls spätestens nach Ablauf der Restbetriebsdauer geeignete Wartungsmassnahmen wie insbesondere ein Ersatz der Messsonde oder eine Regenerierung von deren Füllmasse vorgenommen werden. Vorzugsweise führt die Verletzung des Toleranzkriteriums zur Auslösung eines Warnsignals, beispielsweise in Form einer optischen und/oder akustischen Anzeige, mit der auf die Fälligkeit der Wartungsmassnahmen hingewiesen wird. Besonders vorteilhaft ist es, wenn zusammen mit dem Warnsignal eine Anzeige der Restbetriebsdauer erfolgt, da dies allenfalls erlaubt, vor Einleitung der Wartungsmassnahmen einen laufenden Prozess noch planungsgemäss abzuschliessen.

Im folgenden werden vorteilhafte operationelle Definitionen des Toleranzkriteriums und Prozeduren zur Berechnung der Restbetriebsdauer aufgezeigt. Diese beruhen unter anderem auf der Ermittlung zeitlicher Verläufe gewisser Beobachtungsgrössen. Obwohl diese Verläufe nachfolgend im Kontext kontinuierlicher Funktionen diskutiert werden, gelten die Aussagen sinngemäss auch für diskret abgetastete Funktionen. Insbesondere ist das nachfolgend verwendete Konzept der "zeitlichen Ableitung" im Kontext kontinuierlicher Funktionen als "Differentialquotient", im Kontext diskret abgetasteter Funktionen hingegen als "Differenzenquotient" zu verstehen. Analoges gilt für allfällige Signalglättungs- bzw. Signalfilterungsprozesse.

Grundsätzlich könnte als Verletzung des Toleranzkriteriums das Überschreiten oder das Unterschreiten eines vordefinierten Toleranzwertes der Potentialdifferenz V₁₂ verwendet werden. Allerdings gilt zu berücksichtigen, dass je nach Bauart und individuellen Eigenschaften von Primär- und Sekundärelektrode die Potentialdifferenz anfänglich positiv oder negativ sein kann, überdies die besagte erste sprungartige Veränderung die Potentialdifferenz zu positiveren oder negativeren Werten bringen kann und darüber hinaus der Absolutbetrag |V₁₂| der Potentialdifferenz zunehmen oder abnehmen kann. Dementsprechend ist es zweckmässig, den Absolutbetrag |V₁₂| dahingehend zu überwachen, ob er aus einem vordefinierten Toleranzbereich austritt. Prinzipiell kann der Toleranzbereich von vornherein durch Festlegung einer oberen Toleranzgrenze Vₒ und einer unteren Toleranzgrenze Vᵤ definiert werden. Alternativ wird der Toleranzbereich jedoch an den anfänglichen Wert des Absolutbetrags |V₁₂| der Potentialdifferenz angepasst. So ist im Beispiel der Figur 5 der Toleranzbereich als Toleranzband definiert, welches den als |V_{A}| bezeichneten anfänglichen Wert von |V₁₂| enthält. Die Grundbetriebsdauer t_{G} ergibt sich aus dem Zeitpunkt, in welchem |V₁₂| aus dem Toleranzbereich austritt, wobei dies im Beispiel der Figur 5 der Zeitpunkt ist, in dem |V₁₂| die obere Toleranzgrenze Vₒ überschreitet. Es muss jedoch darauf hingewiesen werden, dass es insbesondere bei unterschiedlich ausgebildeten Bezugselementen mit anfänglich deutlich unterschiedlichen Potentialen V₁ und V₂ möglich ist, dass das Eintreffen der Verarmungsfront bei der Sekundärelektrode zu einer Verringerung der Potentialdifferenz V₁₂ führt. In einem solchen Fall würde die erste sprungartige Veränderung zu kleineren Werten des Absolutbetrags |V₁₂| der Potentialdifferenz führen und könnte somit ein Unterschreiten der unteren Toleranzgrenze Vᵤ bewirken.

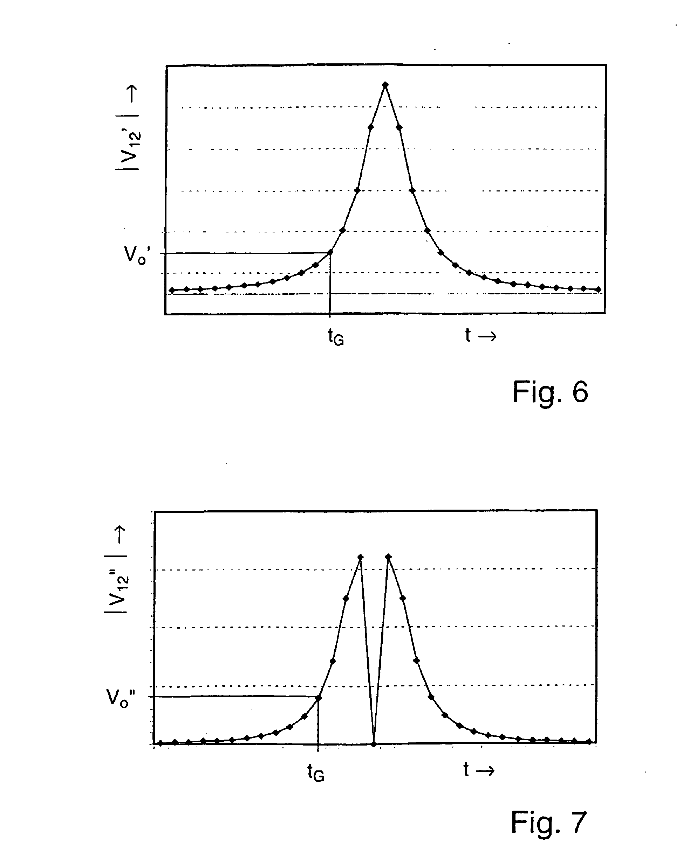

Als weitere Möglichkeit für die Bestimmung der Grundbetriebsdauer t_{G} kann die erste zeitliche Ableitung V₁₂' der Potentialdifferenz bzw. deren Absolutbetrag |V₁₂'| herangezogen werden. Bekanntlich ist die erste zeitliche Ableitung einer Funktion ein Mass für die zeitliche Veränderungsrate dieser Funktion, so dass die erste zeitliche Ableitung bei annähernd konstanten Funktionswerten im wesentlichen Null ist und im Bereich einer sprungartigen Veränderung der Funktion einen Extremalwert durchläuft. Der Absolutbetrag der ersten zeitlichen Ableitung durchläuft dabei unabhängig von der Richtung der sprungartigen Veränderung der Funktion einen Maximalwert. Die Figur 6 zeigt den Verlauf des Absolutbetrags |V₁₂'| der ersten zeitlichen Ableitung der Potentialdifferenz für einen Zeitausschnitt in der Nähe der ersten sprungartigen Veränderung der Potentialdifferenz V₁₂ wobei der Maximalwert von |V₁₂'| der steilsten Stelle im Sprunggebiet der Potentialdifferenz entspricht. Zweckmässigerweise wird als Verletzung des Toleranzkriteriums das Überschreiten eines vordefinierten Toleranzwertes Vₒ' durch den Absolutbetrag |V₁₂'| der ersten zeitlichen Ableitung der Potentialdifferenz verwendet. Die Verletzung des Toleranzkriteriums kann aber beispielsweise auch so definiert werden, dass der Absolutbetrag |V₁₂'| der ersten zeitlichen Ableitung der Potentialdifferenz zunächst einen ersten Toleranzwert Vₒ' überschreiten und danach einen zweiten Toleranzwert Vᵤ' unterschreiten muss.

Aus dem vorangehenden ist ohne weiteres ersichtlich, dass anstelle des Absolutbetrags |V₁₂'| der ersten zeitlichen Ableitung der Absolutbetrag |V₁₂"| der zweiten zeitlichen Ableitung der Potentialdifferenz herangezogen werden kann. Die Figur 7 zeigt den Verlauf des Absolutbetrags |V₁₂"| der zweiten zeitlichen Ableitung der Potentialdifferenz wiederum für einen Zeitausschnitt in der Nähe der ersten sprungartigen Veränderung der Potentialdifferenz V₁₂ wobei der zwischen zwei Maximalwerten von |V₁₂"| liegende Minimalwert dem Wendepunkt des zeitlichen Verlaufs der Potentialdifferenz in deren Sprunggebiet entspricht. Zweckmässigerweise wird als Verletzung des Toleranzkriteriums das Überschreiten eines vordefinierten Toleranzwertes Vₒ" durch den Absolutbetrag |V₁₂"| der zweiten zeitlichen Ableitung der Potentialdifferenz verwendet. Wie bereits oben ausgeführt, kann allerdings auch das Durchlaufen von zwei oder mehreren Toleranzwerten verwendet werden.

Grundsätzlich könnte die Restbetriebsdauer Δt_{R} unabhängig von der ermittelten Grundbetriebsdauer t_{G} angesetzt werden, beispielsweise indem eine vordefinierte Erfahrungsgrösse verwendet wird. Wesentlich vorteilhafter ist es jedoch, wenn die Restbetriebsdauer Δt_{R} anhand der Grundbetriebsdauer t_{G} beispielsweise durch Multiplikation mit einem vordefinierten Multiplikator m berechnet wird. Damit lassen sich insbesondere die herrschenden Betriebsbedingungen berücksichtigen, welche beispielsweise ein besonders schnelles oder ein besonders langsames Fortschreiten der Verarmungsfront bewirken können.

Der Wert des Multiplikators m ist so zu wählen, dass nach Ablauf der damit berechneten Restbetriebsdauer die Verarmungsfront noch nicht bis zum primären Bezugselement vorgedrungen ist. Insbesondere kann als obere Grenze für den Multiplikator m näherungsweise das Wegstreckenverhältnis L₂₁/L₀₂ der Wegstrecke L₂₁ von Sekundärelektrode 140 zu Primärelektrode 122 bezogen auf die Wegstrecke L₀₂ von der Öffnung 112 bis zur Sekundärelektrode 140 verwendet werden. Der hier verwendete Begriff "Wegstrecke" stimmt nicht notwendigerweise exakt mit dem geometrischen Abstand zwischen den betreffenden Stellen überein, sondern stellt vielmehr die entsprechende Länge des von der Verarmungsfront 148 zurückgelegten Weges dar. Aus Sicherheitsgründen sollte der Multiplikator m kleiner als das besagte Wegstrekkenverhältnis, beispielsweise 90% hiervon, gewählt werden. Selbstverständlich kann der Multiplikator auch aufgrund von Erfahrungswerten bestimmt werden.

Eine zusätzliche Absicherung gegenüber einem Betrieb der Messsonde nach unbemerkter Veränderung des Potentials V₁ am primären Bezugselement lässt sich anhand eines Alarmkriteriums erreichen, dessen Einhaltung nach erfolgter Verletzung des Toleranzkriteriums überwacht wird. Indem bei Verletzung des Alarmkriteriums die Restbetriebsdauer auf Null gesetzt, kann dem Benutzer bzw. der massgeblichen Steuerung mitgeteilt werden, dass die Messsonde keine zuverlässigen Ergebnisse mehr liefert. Insbesondere kann ein Alarmsignal ausgelöst werden, welches zur umgehenden Einleitung der erforderlichen Wartungsmassnahmen auffordert. Die operationellen Definitionen des Alarmkriteriums sind analog zu denjenigen des Toleranzkriteriums zu wählen, denn es ist in gleicher Weise eine sprungartige Veränderung der Potentialdifferenz V₁₂ festzustellen. Dementsprechend kann die Potentialdifferenz selbst oder deren erste oder zweite zeitliche Ableitung, jeweils als Absolutbetrag, verwendet werden.

Besonders vorteilhaft ist die Überwachung auf Einhaltung des Alarmkriteriums, wenn die Berechnung der Restbetriebsdauer Δt_{R} unsicher erscheint, beispielsweise wenn für die Wahl des Multiplikators m keine Erfahrungswerte bestehen oder wenn aufgrund wechselnder oder unbekannter Betriebsbedingungen die Geschwindigkeit der Verarmungsfront variabel oder unbekannt ist.

Zweckmässig ist die Überwachung auf Einhaltung des Alarmkriteriums auch bei Vorversuchen mit einem bestimmten Messsonden-Typ, bei welchen die Messsonde ungeachtet der bei Verletzung des Toleranzkriteriums ermittelten Restbetriebsdauer bis zur Verletzung des Alarmkriteriums weiter betrieben wird, um dadurch Erfahrungswerte für die Berechnungsweise der Restbetriebsdauer zu gewinnen.

Die in den Figuren 4 bis 7 dargestellten Zeitverläufe sind insofern idealisiert, als bei gewissen Anwendungen zusätzlich eine fluktuierende bzw. rauschende Komponente hinzukommt. Dieser störende Signalanteil wird bei der Bildung der zeitlichen Ableitung verstärkt, d.h. das Signal-zu-Rausch-Verhältnis wird mit zunehmend höheren zeitlichen Ableitungen schlechter. Um zu vermeiden, dass eine momentane Fluktuation der überwachten Grösse |V₁₂| bzw. |V₁₂'| bzw. |V₁₂"| eine vorzeitige Verletzung des Toleranz- oder Alarmkriteriums hervorruft, ist es zweckmässig, beim Überwachen der Potentialdifferenz eine Signalfilterung vorzunehmen. Je nach Messart kann diese Filterung analog oder digital erfolgen.

Aus dem Vorangehenden wird deutlich, dass die erfindungsgemässe Vorrichtung zur Prozessüberwachung und/oder zur Prozesssteuerung verwendbar ist. Dabei trägt die Bestimmung der Restbetriebsdauer der potentiometrischen Messsonde wesentlich zur Prozesssicherheit bei, indem sich ein durch die Elektrolytverarmung ergebender Messfehler anhand der Restbetriebsdauer vermeiden lässt.

### Bezugszeichenliste

- 2: Gehäuse
- 4: Hohlraum von 2
- 6: primäres Bezugselement
- 8: sekundäres Bezugselement
- 10: Elektrolyt
- 12: Öffnung von 2
- 14: Endbereich von 2
- 16: Füllmasse
- 18: Patrone von 6
- 20: Primärelektrode
- 22: chlorierter Silberdraht von 20
- 24: Primärelektrolyt
- 26: offenes Ende von 18
- 28: Zuleitung für 20
- 30: Steckkontakt für 28
- 32: Kopfteil von 2
- 34: Dichtung von 18
- 36: Patrone von 8
- 38: offenes Ende von 36
- 40: Sekundärelektrode
- 42: chlorierter Silberdraht von 40
- 44: Sekundärelektrolyt
- 46: Zuleitung für 40
- 48: Steckkontakt für 46
- 50: Dichtung von 36
- 52: Verarmungsfront
- 54: verarmter Teil von 16
- 56: nicht verarmter Teil von 16
- 102: Gehäuse
- 104: Hohlraum von 102
- 106: primäres Bezugselement
- 108, 108a: sekundäres Bezugselement
- 110: Elektrolyt
- 112: Öffnung von 102
- 114: Endbereich von 102
- 116: Füllmasse
- 118: Innenrohr
- 120: offenes Ende von 118
- 122: Primärelektrode
- 124: chlorierter Silberdraht von 122
- 126: Primärelektrolyt
- 128: chlorierter Endabschnitt von 124
- 130: verschlossenes Ende von 118
- 132: Zuleitung für 122
- 134: Kopfteil von 102
- 136: Dichtung von 102
- 138: Steckkontakt für 132
- 140, 140a: Sekundärelektrode
- 142, 142a: chlorierter Silberdraht von 140
- 144: Zuleitung für 140
- 146: Steckkontakt für 144
- 148: Verarmungsfront
- A: Längsachse von 2
- L: Längsversatz zwischen 6 und 8
- V₁: Potential der Primärelektrode
- V₂: Potential der Sekundärelektrode

## Patentansprüche

1. Verfahren zur Bestimmung einer Restbetriebsdauer einer potentiometrischen Messsonde mit einem Elektrolyten sowie einem primären Bezugselement und einem sekundären Bezugselement, welche derart angeordnet sind, dass eine von einer Öffnung der Messsonde ausgehend fortschreitende Verarmung des Elektrolyten das sekundäre Bezugselement vor dem primären Bezugselement erreicht, **dadurch gekennzeichnet, dass** die zwischen primärem Bezugselement und sekundärem Bezugselement vorliegende Potentialdifferenz (V₁₂) auf Einhaltung eines vordefinierten Toleranzkriteriums überwacht wird und bei Verletzung des Toleranzkriteriums eine seit Inbetriebnahme der Messsonde verflossene Grundbetriebsdauer (t_{G}) ermittelt und daraus die Restbetriebsdauer (Δt_{R}) der Messsonde berechnet wird.

2. Verfahren nach Anspruch 1, **dadurch gekennzeichnet, dass** eine Verletzung des Toleranzkriteriums zur Auslösung eines Warnsignals führt.

3. Verfahren nach Anspruch 1 oder 2, **dadurch gekennzeichnet, dass** die Potentialdifferenz (V₁₂) im wesentlichen kontinuierlich überwacht wird.

4. Verfahren nach Anspruch 1 oder 2, **dadurch gekennzeichnet, dass** die Potentialdifferenz (V₁₂) in zeitlichen Abständen überwacht wird.

5. Verfahren nach einem der Ansprüche 1 bis 4, **dadurch gekennzeichnet, dass** beim Überwachen der Potentialdifferenz (V₁₂) eine Signalfilterung vorgenommen wird.

6. Verfahren nach einem der Ansprüche 1 bis 5, **dadurch gekennzeichnet, dass** als Verletzung des Toleranzkriteriums der Austritt des Absolutbetrages (|V₁₂|) der Potentialdifferenz aus einem vordefinierten Toleranzbereich verwendet wird.

7. Verfahren nach einem der Ansprüche 1 bis 5, **dadurch gekennzeichnet, dass** als Verletzung des Toleranzkriteriums das Durchschreiten eines oder mehrerer vordefinierter Toleranzwerte durch den Absolutbetrag (|V₁₂'|) der ersten zeitlichen Ableitung der Potentialdifferenz verwendet wird.

8. Verfahren nach einem der Ansprüche 1 bis 5, **dadurch gekennzeichnet, dass** als Verletzung des Toleranzkriteriums das Durchschreiten eines oder mehrerer vordefinierter Toleranzwerte durch den Absolutbetrag der zweiten zeitlichen Ableitung (|V₁₂"|) der Potentialdifferenz verwendet wird.

9. Verfahren nach einem der Ansprüche 1 bis 8, **dadurch gekennzeichnet, dass** die Restbetriebsdauer (Δt_{R}) durch Multiplikation der Grundbetriebsdauer (t_{G}) mit einem vordefinierten Multiplikator (m) berechnet wird.

10. Verfahren nach einem der Ansprüche 1 bis 9, **dadurch gekennzeichnet, dass** die Potentialdifferenz (V₁₂) nach erfolgter Verletzung des Toleranzkriteriums auf Einhaltung eines vordefinierten Alarmkriteriums überwacht und bei Verletzung des Alarmkriteriums die Restbetriebsdauer (Δt_{R}) auf Null gesetzt wird.

11. Verfahren nach Anspruch 10, **dadurch gekennzeichnet, dass** eine Verletzung des Alarmkriteriums zur Auslösung eines Alarmsignals führt.

12. Verfahren nach Anspruch 10 oder 11, **dadurch gekennzeichnet, dass** als Verletzung des Alarmkriteriums der Austritt des Absolutbetrages (|V₁₂|) der Potentialdifferenz aus einem vordefinierten Alarmbereich verwendet wird.

13. Verfahren nach Anspruch 10 oder 11, **dadurch gekennzeichnet, dass** als Verletzung des Alarmkriteriums das Durchschreiten eines oder mehrerer vordefinierter Alarmwerte durch den Absolutbetrag (|V₁₂'|) der ersten zeitlichen Ableitung der Potentialdifferenz verwendet wird.

14. Verfahren nach Anspruch 10 oder 11, **dadurch gekennzeichnet, dass** als Verletzung des Alarmkriteriums das Durchschreiten eines oder mehrerer vordefinierter Alarmwerte durch den Absolutbetrag der zweiten zeitlichen Ableitung (|V₁₂"|) der Potentialdifferenz verwendet wird.

15. Vorrichtung zur Durchführung des Verfahrens nach Anspruch 1, welche aufweist:
a) eine potentiometrische Messsonde, mit einen Elektrolyten sowie einem primären Bezugselement und einem sekundären Bezugselement, welche derart angeordnet sind, dass eine von einer Öffnung der Messsonde ausgehend fortschreitende Verarmung des Elektrolyten das sekundäre Bezugselement vor dem primären Bezugselement erreicht;
b) Zeiterfassungsmittel zur Erfassung einer seit Inbetriebnahme der Messsonde verflossenen Betriebsdauer (t);
c) Überwachungsmittel zur Überwachung der zwischen primärem Bezugselement und sekundärem Bezugselement vorliegenden Potentialdifferenz (V₁₂);
d) Rechenmittel zur Berechnung einer Restbetriebsdauer (Δt_{R}) der Messonde.

16. Verwendung der Vorrichtung nach Anspruch 15 zur Prozessüberwachung und/oder Prozesssteuerung.

## Claims

1. Method of determining a remaining operating time of a potentiometric measuring probe containing an electrolyte as well as a primary reference element and a secondary reference element that are arranged so that an electrolyte deficiency advancing from an opening of the measuring probe arrives at the secondary reference element before it arrives at the primary reference element, **characterized in that** the potential difference (V₁₂) existing between the primary reference element and the secondary reference element is monitored for conformance to a predefined tolerance criterion, and when the tolerance criterion is found to be violated, the elapsed operating time from the point when the measuring probe was put into operation is determined as a base time period (t_{G}); and the remaining operating time (Δt_{R}) of the measuring probe is calculated from the base time period (t_{G}).

2. Method according to claim 1, **characterized in that** a violation of the tolerance criterion causes a warning signal to be triggered.

3. Method according to claim 1 or 2, **characterized in that** the monitoring of the potential difference (V₁₂) is substantially continuous.

4. Method according to claim 1 or 2, **characterized in that** the monitoring of the potential difference (V₁₂) is performed at intermittent points in time.

5. Method according to one of the claims 1 through 4, **characterized in that** signal-filtering is used in the monitoring of the potential difference (V₁₂).

6. Method according to one of the claims 1 through 5, **characterized in that** the departure of the absolute amount (|V₁₂|) of the potential difference from a predefined tolerance range is used as a condition for finding the tolerance criterion violated.

7. Method according to one of the claims 1 through 5, **characterized in that** the traversing of one or more predefined tolerance values by the absolute amount (|V₁₂'|) of the first time derivative of the potential difference is used as a condition for finding the tolerance criterion violated.

8. Method according to one of the claims 1 through 5, **characterized in that** the traversing of one or more predefined tolerance values by the absolute amount (|V₁₂"|) of the second time derivative of the potential difference is used as a condition for finding the tolerance criterion violated.

9. Method according to one of the claims 1 through 8, **characterized in that** the remaining operating time (Δt_{R}) is calculated by multiplying the base time period (t_{G}) with a predefined multiplication factor (m).

10. Method according to one of the claims 1 through 9, **characterized in that** after a violation of the tolerance criterion has occurred, the potential difference (V₁₂) is monitored for conformance to a predefined alarm criterion; and when the alarm criterion is found to be violated, the remaining operating time (Δt_{R}) is set to zero.

11. Method according to claim 10, **characterized in that** a violation of the alarm criterion causes an alarm signal to be triggered.

12. Method according to one of the claims 10 or 11, **characterized in that** the departure of the absolute amount (|V₁₂|) of the potential difference from a predefined alarm range is used as a condition for finding the alarm criterion violated.

13. Method according to one of the claims 10 or 11, **characterized in that** the traversing of one or more predefined alarm values by the absolute amount (|V₁₂'|) of the first time derivative of the potential difference is used as a condition for finding the alarm criterion violated.

14. Method according to one of the claims 10 or 11, **characterized in that** the traversing of one or more predefined alarm values by the absolute amount (|V₁₂"|) of the second time derivative of the potential difference is used as a condition for finding the alarm criterion violated.

15. Apparatus for performing the method of claim 1, comprising:
a) a potentiometric measuring probe with an electrolyte as well as a primary reference element and a secondary reference element that are arranged so that an electrolyte deficiency advancing from an opening of the measuring probe arrives at the secondary reference element before it arrives at the primary reference element;
b) time-measurement means for measuring an elapsed operating time (t) from when the measuring probe was put into operation;
c) monitoring means for monitoring the potential difference (V₁₂) existing between the primary reference element and the secondary reference element;
d) calculating means for calculating a remaining operating time (Δt_{R}) of the measuring probe.

16. Use of the apparatus according to claim 15 for process-monitoring and/or process-control applications.

## Revendications

1. Procédé de détermination d'une durée de service résiduelle d'une sonde de mesure potentiométrique comportant un électrolyte ainsi qu'un élément de référence primaire et un élément de référence secondaire, agencés de telle façon qu'un appauvrissement de l'électrolyte progressant depuis une ouverture de la sonde de mesure atteint l'élément de référence secondaire avant l'élément de référence primaire, **caractérisé en ce que** la différence de potentiel (V₁₂) entre les éléments de référence primaire et secondaire est surveillée pour déterminer si elle respecte un critère de tolérance prédéfini et **en ce que** si le critère de tolérance est transgressé, une durée de service de base (t_{G}) écoulée depuis la mise en service de la sonde de mesure est déterminée, à partir de laquelle est calculée la durée de service résiduelle (Δt_{R}) de la sonde de mesure.

2. Procédé selon la revendication 1, **caractérisé en ce que** la transgression du critère de tolérance provoque le déclenchement d'un signal d'alarme.

3. Procédé selon l'une des revendications 1 ou 2, **caractérisé en ce que** la différence de potentiel (V₁₂) est surveillée pratiquement en continu.

4. Procédé selon l'une des revendications 1 ou 2, **caractérisé en ce que** la différence de potentiel (V₁₂) est surveillée de façon intermittente.

5. Procédé selon l'une quelconque des revendications 1 à 4, **caractérisé en ce qu'**une filtration de signal est réalisée lors de la surveillance de la différence de potentiel (V₁₂).

6. Procédé selon l'une quelconque des revendications 1 à 5, **caractérisé en ce que** le critère de tolérance est transgressé lorsque la valeur absolue de la différence de potentiel (|V₁₂|) sort d'une plage de tolérance prédéfinie.

7. Procédé selon l'une quelconque des revendications 1 à 5, **caractérisé en ce que** le critère de tolérance est transgressé lorsque la valeur absolue de la première dérivée temporelle de la différence de potentiel (|V₁₂'|) est dépassée par une ou plusieurs valeurs de tolérance prédéfinies.

8. Procédé selon l'une quelconque des revendications 1 à 5, **caractérisé en ce que** le critère de tolérance est transgressé lorsque la valeur absolue de la deuxième dérivée temporelle de la différence de potentiel (|V₁₂"|) est dépassée par une ou plusieurs valeurs de tolérance prédéfinies.

9. Procédé selon l'une quelconque des revendications 1 à 8, **caractérisé en ce que** la durée de service résiduelle (Δt_{R}) est calculée en multipliant la durée de service de base (t_{G}) par un facteur de multiplication prédéfini (m).

10. Procédé selon l'une quelconque des revendications 1 à 9, **caractérisé en ce que** la différence de potentiel (V₁₂) après qu'une transgression du critère de tolérance se soit produite est surveillée pour déterminer si elle respecte un critère d'alarme prédéfini et **en ce qu'**en cas de transgression du critère d'alarme, la durée de service résiduelle (Δt_{R}) est consignée à une valeur nulle.

11. Procédé selon la revendication 10, **caractérisé en ce qu'**une transgression du critère d'alarme conduit au déclenchement d'un signal d'alarme.

12. Procédé selon l'une des revendications 10 ou 11, **caractérisé en ce que** le critère d'alarme est transgressé lorsque la valeur absolue de la différence de potentiel (|V₁₂|) sort d'une plage d'alarme prédéfinie.

13. Procédé selon l'une des revendications 10 ou 11, **caractérisé en ce que** le critère d'alarme est transgressé lorsque la valeur absolue de la première dérivée temporelle de la différence de potentiel (|V₁₂'|) dépasse une ou plusieurs valeurs d'alarme prédéfinies.

14. Procédé selon l'une des revendications 10 ou 11, **caractérisé en ce que** le critère d'alarme est transgressé lorsque la valeur absolue de la deuxième dérivée temporelle de la différence de potentiel (|V₁₂"|) dépasse une ou plusieurs valeurs d'alarme prédéfinies.

15. Dispositif pour la réalisation du procédé selon la revendication 1, comprenant :
a) une sonde de mesure potentiométrique comportant un électrolyte ainsi qu'un élément de référence primaire et un élément de référence secondaire, agencés de telle façon qu'un appauvrissement de l'électrolyte progressant depuis une ouverture de la sonde de mesure atteint l'élément de référence secondaire avant l'élément de référence primaire ;
b) un moyen de mesure temporel d'une durée de service (t) écoulée depuis la mise en service de la sonde de mesure ;
c) un moyen de surveillance de la différence de potentiel (V₁₂) entre les éléments de référence primaire et secondaire ;
d) un moyen de calcul de la durée de service résiduelle (Δt_{R}) de la sonde de mesure.

16. Utilisation du dispositif selon la revendication 15 pour la surveillance ou la contrôle d'un processus.
